# EUROPEAN PATENT APPLICATION

(11) **EP 4 742 681 A1**
(43) Date of publication of application: **13.05.2026**
(21) Application number: 24838735.9
(22) Date of filing: 05.07.2024
(51) Int. Cl.: H04N 21/439

(54) **MEDIA CONTENT DISPLAY METHOD, APPARATUS, ELECTRONIC DEVICE AND STORAGE MEDIUM**

(30) Priority: 07.07.2023 CN 202310835198
(71) Applicant: Beijing Zitiao Network Technology Co., Ltd., Beijing 100190 (CN)
(72) Inventor: LIU, Yuande, Beijing 100028 (CN); SHEN, Youjia, Beijing 100028 (CN)
(74) Representative: Grünecker Patent- und Rechtsanwälte PartG mbB
(86) International application number: PCT/CN2024/103977
(87) International publication number: WO 2025/011482

(57) **Abstract**

Provided in the embodiments of the present disclosure are a media content display method, an apparatus, an electronic device and a storage medium. The method comprises: acquiring media content, the media content comprising audio, the audio corresponding to a plurality of set timestamps, the media content further comprising a plurality of media resources, and the display form of the plurality of media resources being kept unchanged before and after releasing of the media content; displaying on a display interface at least one media resource included in the media content and playing the audio; when the media content is in an automatic playback mode and the audio is played to a target timestamp among the plurality of set timestamps, switching on the display interface to display the media resource corresponding to the target timestamp, the automatic playback mode being a mode in which each media resource is automatically displayed on the display interface when the audio is played to the corresponding set timestamp; and in response to the switching operation on the display interface, displaying on the display interface the media resource corresponding to the switching operation.

## Description

This application claims the priority of Chinese Patent Application No. 202310835198.4 filed on July 7, 2023 and entitled "MEDIA CONTENT DISPLAY METHOD, APPARATUS, ELECTRONIC DEVICE AND STORAGE MEDIUM". The contents disclosed in the above Chinese Patent Application are incorporated herein by reference in its entirety as a part of this application.

### TECHNICAL FIELD

Embodiments of the present disclosure relate to computer technology, and more particularly to a media content display method and apparatus, an electronic device, and a storage medium.

### BACKGROUND

With the continuous development of computer technology, diverse and substantial media content, such as image, video or the combination of image and video, can be shown to users through a display interface. Users can also share produced media content with others by posting the media content.

### SUMMARY

The present disclosure provides a media content display method and apparatus, an electronic device, and a storage medium to improve the user experience when displaying the media content in the display interface.

An embodiment of the present disclosure provides a media content display method, including:
acquiring media content, the media content including audio corresponding to a plurality of set timestamps, and the media content further including a plurality of media resources, display forms of the plurality of media resources remaining unchanged before and after a post of the media content;
displaying, on a display interface, at least one media resource among the plurality of media resources included in the media content, and playing the audio;
switching, in response to the media content being in an automatic playback mode and the audio being played to a target timestamp among the plurality of set timestamps, to display a media resource corresponding to the target timestamp on the display interface, where the automatic playback mode is a mode in which each media resource is automatically displayed on the display interface in response to the audio being played to a corresponding set timestamp; and
displaying, in response to a switching operation on the display interface, on the display interface, a media resource to which the switching operation corresponds.

An embodiment of the present disclosure further provides a media content display apparatus, including:
an acquiring module, configured to acquire media content, audio included in the media content corresponding to a plurality of set timestamps, the media content including a plurality of media resources, and display forms of the plurality of media resources remaining unchanged before and after a post of the media content;
a first display module, configured to display, on a display interface, at least one media resource included in the media content and play the audio;
a second display module, configured to switch to display, on the display interface, a media resource corresponding to a target timestamp among the plurality of set timestamps in response to the media content being in an automatic playback mode and the audio being played to the target timestamp, where the automatic playback mode is a mode in which each media resource is automatically displayed on the display interface in response to the audio being played to a corresponding set timestamp; and
a third display module, configured to display, in response to a switching operation on the display interface, on the display interface, a media resource to which the switching operation corresponds.

An embodiment of the present disclosure further provides an electronic device, including:
one or more processing devices; and
a storage device configured to store one or more programs,
the one or more programs, when executed by the one or more processing devices, cause the one or more processing devices to implement the media content display method provided by the embodiment of the present disclosure.

An embodiment of the present disclosure further provides a storage medium including computer-executable instructions that, when executed by a computer processor, cause the computer processor to perform the media content display method provided by the embodiment of the present disclosure.

### BRIEF DESCRIPTION OF DRAWINGS

The above and other features, advantages, and aspects of various embodiments of the present disclosure will become more apparent when taken in conjunction with the accompanying drawings and referring to of the following Detailed Description. Throughout the drawings, the same or similar reference numerals denote the same or similar elements. It should be understood that the drawings are schematic and that originals and elements are not necessarily drawn to scale.
Fig. 1 is a schematic flow diagram of a media content display method according to an embodiment of the present disclosure.
Fig. 2 is a schematic diagram illustrating correspondence relationships between set timestamps and media resources according to an embodiment of the present disclosure.
Fig. 3 is a schematic diagram of a switching operation on a display interface according to an embodiment of the present disclosure.
Fig. 4 is a schematic flow diagram of another media content display method according to an embodiment of the present disclosure.
Fig. 5 is a schematic flow diagram of another media content display method according to an embodiment of the present disclosure.
Fig. 6 is a schematic diagram of switching from an automatic playback mode to a free browsing mode according to an embodiment of the present disclosure.
Fig. 7 is a schematic diagram of switching from an automatic playback mode to a free browsing mode and then returning to the automatic playback mode according to an embodiment of the present disclosure;
Fig. 8 is a schematic structural diagram of a component for implementing a media content display method according to an embodiment of the present disclosure;
Fig. 9 is a schematic flow diagram of acquiring media content according to an embodiment of the present disclosure.
Fig. 10 is a schematic structural diagram of a media content display apparatus according to an embodiment of the present disclosure.
Fig. 11 is a schematic structural diagram of an electronic device according to an embodiment of the present disclosure.

### DETAILED DESCRIPTION

Embodiments of the present disclosure will be described in more detail below with reference to the accompanying drawings. While certain embodiments of the present disclosure are shown in the drawings, it should be understood that the present disclosure may be embodied in various forms and should not be construed as limited to the embodiments set forth herein, but are provided for a more thorough and complete understanding of the present disclosure. It should be understood that the drawings and embodiments of the present disclosure are for illustrative purposes only, and are not intended to limit the scope of protection of the present disclosure.

It should be understood that the various steps described in the method embodiments of the present disclosure may be performed in different orders, and/or in parallel. Furthermore, method embodiments may include additional steps and/or omit performing the illustrated steps. The scope of the present disclosure is not limited in this respect.

As used herein, the term "comprising/including" and variations thereof are in an open-ended sense, i.e., " comprising/including but not limited to". The term "based on" is "based at least in part on". The term "one/an embodiment" means "at least one embodiment"; the term "another embodiment" means "at least one additional embodiment"; the term "some embodiments" means "at least some embodiments". Relevant definitions of other terms will be given in the following description.

It should be noted that the concepts such as "first" and "second" mentioned in the present disclosure are only used to distinguish different devices, modules, or units, and are not used to limit the order or interdependence of functions performed by these devices, modules, or units.

It should be noted that the modifiers of "one" and "a plurality" mentioned in the present disclosure are schematic and not limitative, and should be understood by those skilled in the art as "one or more" unless otherwise explicitly indicated in the context.

The names of messages or information interacted between multiple devices in embodiments of the present disclosure are for illustrative purposes only, and are not intended to limit the scope of these messages or information.

It can be understood that before using the technical solution disclosed in each embodiment of the present disclosure, users should be informed of the types, usage scope, usage scenarios, etc. of the personal information involved in the present disclosure in an appropriate manner in accordance with relevant laws and regulations, and authorization from the users should be acquired.

For example, in response to receiving an active request from the user, prompt information is sent to the user to explicitly prompt the user that the operation it requests to perform will require the acquisition and use of the user's personal information. Accordingly, the user can autonomously select whether or not to provide personal information to software or hardware such as an electronic device, an application program, a server, or a storage medium that performs the operation of the technical solution of the present disclosure according to the prompt information.

As an optional but non-limiting implementation, in response to receiving the active request from the user, the manner of sending the prompt information to the user may be, for example, the manner of pop-up window, and the prompt information may be presented in the form of text in the pop-up window. In addition, the pop-up window can also carry an optional control for users to choose "agree" or "disagree" to provide personal information to the electronic device.

It is to be understood that the above-described procedures of notifying and acquiring user authorization are merely illustrative and do not limit the implementation forms of the present disclosure, and other methods satisfying relevant laws and regulations can also be applied to the implementation forms of the present disclosure.

It can be understood that the data involved in this technical solution (including but not limited to the data itself, the acquisition or use of data) should comply with the requirements of corresponding laws, regulations and relevant provisions.

In the related art, image materials, video material and music materials can be imported according to the template, synthesized into a video and displayed to the user. In the synthesized video, the image materials and video materials are switched in sync with the beats of the music. However, the media content displayed by this method is a complete video, and users cannot freely browse the individual materials included in the video.

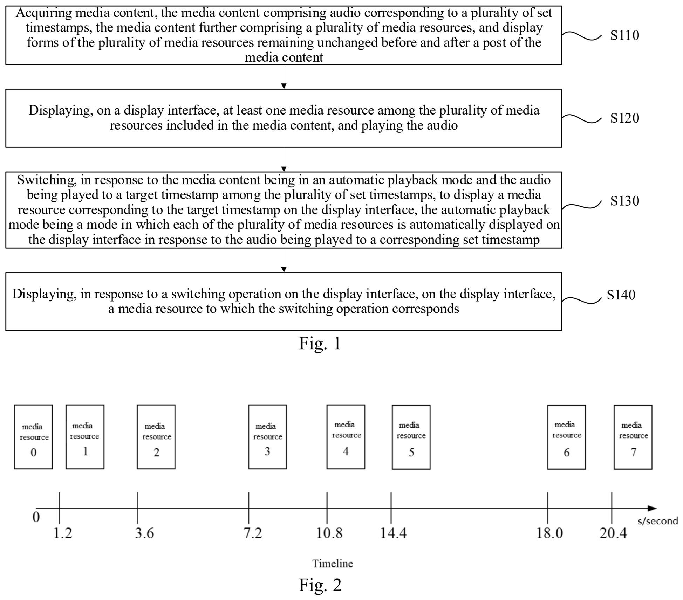

Fig. 1 is a schematic flow diagram of a media content display method according to an embodiment of the present disclosure. The embodiment of the present disclosure is applicable to a situation where media content is displayed in a scene of media content browsing. The method may be executed by a media content display apparatus, which may be implemented in the form of software and/or hardware, and integrated in an electronic device. Optionally, the electronic device may be a mobile terminal, a PC terminal, a TV streaming media device, or the like.

As shown in Fig. 1, in an embodiment, the method may include:
S110, acquiring media content, audio included in the media content corresponding to a plurality of set timestamps, and the media content including a plurality of media resources, display forms of the plurality of media resources remaining unchanged before and after a post of the media content.

Media content can refer to the content that is capable of conveying information. Through the production and post of the media content, information that needs to be conveyed within the media content can be transmitted to the users. Media content may include audio and a plurality of media resources, and the media resource may include image and/or video. When the media resource includes image, the media content includes audio and multiple images and can be understood as an image work; when the media resource includes video, the media content includes audio and multiple videos and can be understood as a video work; and when the media resource includes image and video, the media content includes audio, image and video and can be understood as a mixed work of image and video. The media content can be posted to achieve sharing of the media content.

The audio included in the media content corresponds to a plurality of set timestamps, where a set timestamp may be a timestamp configured for switching media resources, and then the media content may be displayed according to the plurality of set timestamps corresponding to the audio. That is, when the plurality of media resources are played with the audio as the background sound, the plurality of media resources may be switched in beat-sync manner according to the plurality of set timestamps corresponding to the audio. Exemplarily, the set timestamp may be a timestamp determined based on beats of the audio.

In an embodiment of the present disclosure, the display forms of the plurality of media resources may include image and/or video, and the display forms of the plurality of media resources remain unchanged before and after the post of the media content. If it is determined that the media resources included in the media content include images before the post of the media content, the media resources included in the media content will still be displayed in the form of images after the post of the media content; and if it is determined that the media resources included in the media content include videos before the post of the media content, the media resources included in the media content will still be displayed in the form of videos after the post of the media content. That is, assuming that the media resource selected by the user when posting the media content includes two images, the posted media content is an image collection including two images, rather than a video synthesized by the two images.

In an embodiment of the present disclosure, the method of acquiring media content is not limited, for example, audio and a plurality of media resources included in the media content may be stored in a server or locally stored in an electronic device, and when it is necessary to display the media content, the media content may be acquired from the server or acquired locally from the electronic device.

When acquiring the audio included in the media content, a plurality of set timestamps corresponding to the audio can be simultaneously acquired, so that the plurality of set timestamps corresponding to the audio can be determined subsequently without analyzing and processing the audio, and the plurality of media resources can be switched in beat-sync manner according to the plurality of set timestamps corresponding to the audio.

When acquiring a plurality of media resources included in the media content, for any one of the media resources, if the media resource is an image, a complete image can be acquired so that the image can be directly displayed later; and if the media resource is a video, an original video uploaded by the user can be acquired, or a cropped video can be acquired, or both an original video and a timestamp for cropping the original video can be acquired. For example, the original video may be a video uploaded by a user without any cropping processing, and the cropped video may be a video cropped for the original video.

When the media resource included in the acquired media content is a cropped video, it can be understood that the media resource acquired in advance is a cropped video, and it is not necessary to crop the media resource when the media resource is subsequently displayed. In an embodiment of the present disclosure, the basis for cropping is not limited. For example, a time period during which the cropped video can be played may be determined according to the plurality of set timestamps corresponding to the audio; at the same time, combined with an audio clip corresponding to this time period and a duration of this time period, a video clip in the original video that is suitable for playing this audio clip as the background sound can be determined as the cropped video.

When the media resource included in the acquired media content includes an original video and a timestamp for cropping the original video, it can be understood that the media resource acquired in advance is an original video. When displaying the media resource later, if what needs to be displayed is the original video, it can be directly displayed without cropping; and if what needs to be displayed is the cropped video obtained by cropping the original video, the original video is cropped based on the timestamp for cropping the original video and the cropped video is displayed.

S120, displaying, on a display interface, the media resources included in the media content and playing the audio.

The display interface may be an interface that displays media resources included in the media content. The display interface may be an interface displayed in an application program, and the user can watch the media resources included in the media content displayed on the display interface by triggering a control corresponding to the application program.

The manner in which the media resources included in the media content are displayed on the display interface and the audio is played is not limited. For example, when the audio is played to each set timestamp, the corresponding media resource may be automatically switched to be displayed on the display interface in beat-sync manner in combination with the set timestamp that the current audio has reached (that is, the automatic playback mode in step S130 below). For another example, under the automatic playback mode, the switching of media resources may be triggered in response to a switching operation on the display interface, and the user may freely browse a plurality of media resources on the display interface, with the audio as the background sound. This display mode may be set as the free browsing mode (corresponding to the following step S140). An exemplary embodiment in which the plurality of media resources are displayed in the automatic playback mode, and an exemplary embodiment in which the plurality of media resources are displayed in the free browsing mode will be described in details in the following corresponding steps.

It should be noted that, in the embodiments of the present disclosure, under the automatic playback mode, it may be switched to the free browsing mode in response to a trigger on the display interface by the user; under the free browsing mode, it is then switched back to the automatic playback mode in response to a trigger on the display interface by the user. In the embodiments of the present disclosure, the trigger operation is not limited. Furthermore, a default mode may be set as the automatic playback mode, and then the switching between modes may be performed in response to a trigger on the display interface by the user.

In an embodiment of the present disclosure, the automatic playback mode and the free browsing mode may be provided on the posting side, that is, in a client where the media content is posted. By providing two preview methods, the preview effect of media content at the time of post is the same as the preview effect of media content at the time of consumption, thus improving the user experience.

S130, switching, in response to the media content being in an automatic playback mode and the audio being played to a target timestamp among the plurality of set timestamps, to display a media resource corresponding to the target timestamp on the display interface, the automatic playback mode being a mode in which each media resource is automatically displayed on the display interface in response to the audio being played to a corresponding set timestamp.

The automatic playback mode is a mode in which each media resource is automatically displayed on the display interface when the audio is played to the corresponding set timestamp. Under the automatic playback mode, the media resource may correspond to the set timestamp, and one set timestamp may correspond to the switching of one media resource; that is, when the audio is played to a target timestamp among the set timestamps, the media resource currently displayed on the display interface is switched to a media resource corresponding to the target timestamp. For example, the target timestamp may refer to a timestamp that corresponds to a media resource to be switched, among a plurality of set timestamps included in the audio; and the target timestamp may be understood as a next set timestamp to which the audio is to be played, among a plurality of set timestamps.

In one embodiment, the audio may be background music, and correspondingly, a plurality of set timestamps corresponding to the audio may be time nodes corresponding to a plurality of accented syllables in the background music. In such case, under the automatic playback mode, when the background music is played to a time node corresponding to each accented syllable, the corresponding media resource is automatically switched to be displayed on the display interface in beat-sync manner in combination with the time node corresponding to the accented syllable that the background music has reached, that is, the plurality of media resources are switched to be displayed in beat-sync manner according to the time nodes corresponding to the accented syllables in the background music.

In one embodiment, the number of the set timestamps is one less than the number of the media resources, and all the media resources except the first displayed media resource are in a one-to-one correspondence with the set timestamps.

Fig. 2 is a schematic diagram illustrating correspondence relationships between the set timestamps and the media resources according to an embodiment of the present disclosure. As shown in Fig. 2, there are a plurality of time points (1.2, 3.6, 7.2, 10.8, 14.4, 18.0, and 20.4) in the timeline, that is, a plurality of set timestamps, and the number of the plurality of set timestamps is seven. Fig. 2 shows a plurality of media resources, that is, media resource 0, media resource 1, media resource 2, media resource 3, media resource 4, media resource 5, media resource 6, and media resource 7, and the number of the plurality of media resources is eight; that is, the number of the set timestamps is one less than the number of the media resources.

Among the plurality of media resources, media resource 0 may be regarded as the first displayed media resource, and the other media resources except this media resource are in a one-to-one correspondence with the set timestamps; that is, timestamp 1.2 is set to correspond to media resource 1, timestamp 3.6 is set to correspond to media resource 2, and so on for others.

For example, still referring to Fig. 2, assuming that the target timestamp is time point 3.6, when the media content is in the automatic playback mode, if the audio is played to a time point after the 1.2-second mark but has not been played to the 3.6-second mark yet, the media resource currently displayed on the display interface is the media resource 1; and then, when the audio is played to the target timestamp 3.6 among the plurality of set timestamps, the media resource 1 currently displayed on the display interface is switched to the media resource 2 corresponding to the target timestamp.

Note that, for the media content in the automatic playback mode, if the media resource included in the media content acquired in step S110 is a cropped video, when the audio is played to the target timestamp corresponding to this media resource, the media resource (that is, the cropped video) may be directly displayed on the display interface without processing the media resource; if the media resource included in the media content acquired in step S110 includes an original video and a timestamp for cropping the original video, it is necessary to process the media resource (i.e., the original video) to obtain a cropped video, and display the cropped video on the display interface. That is, in the automatic playback mode, the video displayed on the display interface is always a cropped video.

S140, displaying, in response to a switching operation on the display interface, , on the display interface, a media resource to which the switching operation corresponds.

The switching operation may refer to an operation of switching media resources displayed on the display interface, and the embodiment of the present disclosure does not limit the switching operation, for example, the switching operation may be a swipe operation of the user on the display interface, such as a left swipe operation or a right swipe operation, which is not specifically limited. The media resource corresponding to the switching operation can be understood as the media resource to which the switching operation switches and displays.

The playback order of the media resources under the automatic playback mode (the arrangement order of the media resources as shown in Fig. 2) may be determined in advance according to the correspondence relationships between the plurality of set timestamps included in the audio and the media resources. For example, the media resource currently displayed on the display interface is set as the current media resource, the left swipe operation can switch the current media resource to a next media resource corresponding to the current media resource, and the right swipe operation can switch the current media resource to a previous media resource corresponding to the current media resource.

In the embodiment of the present disclosure, the manner in which the media resource corresponding to a switching operation on the display interface is displayed on the display interface in response to the switching operation is not limited. For example, in response to a left swipe operation on the display interface, switching from displaying the current media resource to displaying a next media resource corresponding to the current media resource, on the display interface; and in response to a right swipe operation on the display interface, switching from displaying the current media resource to displaying a previous media resource corresponding to the current media resource, on the display interface.

In the embodiment of the present disclosure, the display form of the media resource displayed after the switching operation is not limited. For example, if the media resource displayed after the switching operation is an image, the image is stationarily displayed on the display interface; if the media resource displayed after the switching operation is a video, there are following two display forms. If the media resource is a cropped video at the time of acquisition, the cropped video is cyclically displayed on the display interface; and if the media resource is an original video at the time of acquisition, the original video is cyclically displayed on the display interface.

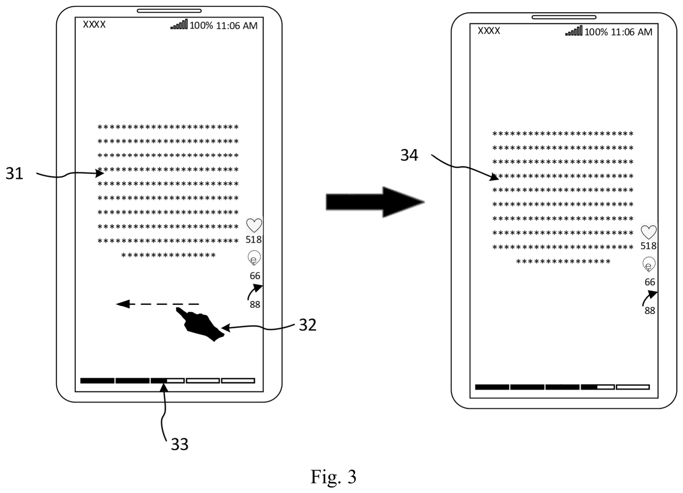

Fig. 3 is a schematic diagram of a switching operation on a display interface according to an embodiment of the present disclosure. The switching operation shown in Fig. 3 is a left swipe operation. As shown in Fig. 3, under the automatic playback mode, a current media resource 31 is displayed at the left side of the display interface, and the playback time period corresponding to the current media resource 31 is a first time period 33, and the first time period 33 can be determined based on a set timestamp corresponding to the current media resource and a next set timestamp of the corresponding set timestamp; in response to a switching operation 32 on the display interface, the free browsing mode is entered, the current media resource 31 displayed on the display interface is switched to a next media resource 34 corresponding to the current media resource, and the next media resource 34 is displayed cyclically or stationarily on the display interface.

In an embodiment of the present disclosure, the user is allowed to freely browse a plurality of media resources on the display interface in response to a switching operation on the display interface one or more times. That is, the switching display of the plurality of media resources under the free browsing mode is realized. The free browsing mode can be switched back to the automatic playback mode in response to a trigger on the display interface by the user, and the plurality of media resources can be continuously displayed in the automatic playback mode.

It should be noted that, in the free browsing mode, there is no need to monitor the plurality of set timestamps corresponding to the audio, that is, there is no need to switch the media resources in beat-sync manner through the set timestamps; instead, when entering the free browsing mode, it continues to play the audio according to the current time point of the audio being played until the playback of the audio is finished, and then the audio is played again from the beginning.

An embodiment of the present disclosure provides a media content display method and apparatus, an electronic device, and a storage medium. The method includes: acquiring media content, where audio included in the media content corresponds to a plurality of set timestamps, and the media content includes a plurality of media resources, display forms of the plurality of media resources remain unchanged before and after a post of the media content; displaying, on a display interface, the media resources included in the media content and playing the audio; in response to the media content being in an automatic playback mode and the audio being played to a target timestamp among the plurality of set timestamps, switching to display a media resource corresponding to the target timestamp on the display interface, where the automatic playback mode is a mode in which each media resource is automatically displayed on the display interface in response to the audio being played to a corresponding set timestamp; and in response to a switching operation on the display interface, displaying, on the display interface, a media resource to which the switching operation corresponds. According to the technical solution, in the automatic playback mode, the media resources correspond to the set timestamps of the audio, and when the audio is played to each set timestamp, the corresponding media resource is automatically switched to be displayed on the display interface in beat-sync manner in combination with the set timestamp that the current audio has reached, that is, one set timestamp corresponds to the switching of one media resource, and the display forms of the media resources in the automatic playback mode remain unchanged before and after the post of the media content, so as to solve the problem that the preview effect of the media content at the time of post is inconsistent with the preview effect of the media content at the time of consumption; in response to the switching operation on the display interface, the user may be allowed to freely browse individual media resources included in the media content. In summary, in the automatic playback mode, the method allows the media resources to be automatically switched in beat-sync manner according to the set timestamps of the audio, and enables the user to freely browse the individual media resources included in the media content in response to the switching operation.

On the basis of the above-described embodiments, an embodiment of the present disclosure further provides a modified embodiment of the above-described embodiments, and it should be noted here that, in order to simplify the description, only differences from the above-described embodiments are described in the modified embodiment.

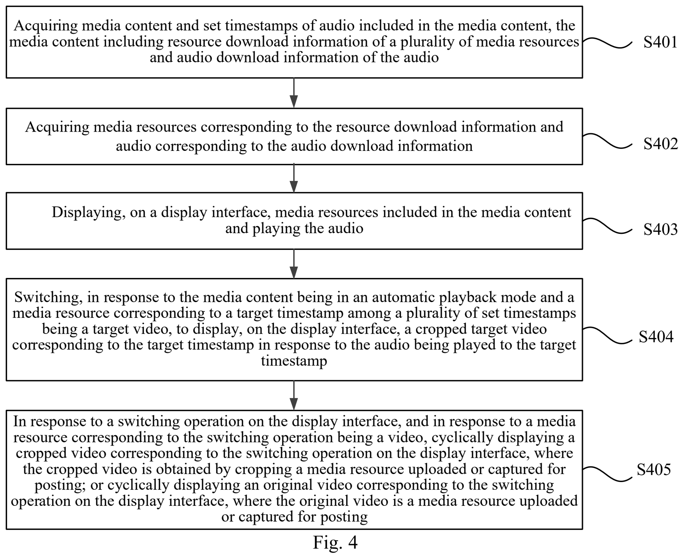

Fig. 4 is a schematic flow diagram of another media content display method provided by an embodiment of the present disclosure, and the embodiment of the present disclosure is a more detailed description of the step of acquiring media content on the basis of the above embodiment, a more detailed description of the step of switching to display a media resource on a display interface corresponding to a target timestamp among a plurality of set timestamps in response to the audio being played to the target timestamp, as well as a more detailed description of the step of displaying, on the display interface, the media resource to which the switching operation corresponds.

As shown in Fig. 4, the method includes:
S401, acquiring media content and set timestamps of audio included in the media content, the media content including resource download information of a plurality of media resources and audio download information of the audio.

In an embodiment of the present disclosure, the resource download information may be information for downloading the plurality of media resources, the audio download information may be information for downloading the audio, where the resource download information and the audio download information are not limited here, and the resource download information and the audio download information are collectively referred to as download information. The download information may indicate an address of a server storing the media resources or the audio, or a path of a local file in an electronic device storing the media resources or the audio.

When acquiring the media content, the set timestamps of the audio included in the media content are acquired at the same time, so that a plurality of set timestamps corresponding to the audio can be determined subsequently without analyzing and processing the audio, and a plurality of media resources can be switched in beat-sync manner according to the plurality of set timestamps corresponding to the audio. For example, the set timestamps corresponding to the audio are strongly correlated with the carousel progress of the media resources, that is, one set timestamp corresponds to the switching of one media resource, and the set timestamps of the audio are determined at the same time when the audio is acquired and can be directly used.

S402, acquiring media resources corresponding to the resource download information and audio corresponding to the audio download information.

Acquiring the media resources corresponding to the resource download information and the audio corresponding to the audio download information may include: downloading the corresponding media resources according to the address or path indicated by the resource download information, and downloading the corresponding audio according to the address or path indicated by the audio download information. For example, acquisition of media resources and acquisition of audio may be performed in parallel by two different modules, and playback of the audio and display of the media resources are performed when the media resources and the audio are loaded completely.

In one embodiment, the media resource includes image and/or video, and when the media resource is video, the step of acquiring media content includes one or more of the following:
acquiring a cropped video, where the cropped video is a video obtained by cropping based on an audio beat-sync duration, and the audio beat-sync duration is a time duration determined based on a difference between a set timestamp corresponding to the cropped video and a next set timestamp after the corresponding set timestamp;
acquiring an original video uploaded by a user;
acquiring a cropping timestamp corresponding to the original video uploaded by the user and the cropped video, where the cropping timestamp is a timestamp corresponding to a cropped position in the original video uploaded by the user.

In the case of acquiring the cropped video, when the audio is played to a corresponding set timestamp under the automatic playback mode, it can be automatically switched to display the cropped video without processing the cropped video. The set timestamp corresponding to the cropped video (which may be the media resource 1 as shown in Fig. 2) is the set timestamp corresponding to the switching display of the cropped video (the set timestamp 1.2 as shown in Fig. 2), the next set timestamp after the corresponding set timestamp may be the set timestamp 3.6 as shown in Fig. 2, and the audio beat-sync duration is a time duration determined based on the difference between the set timestamp corresponding to the cropped video and the next set timestamp after the corresponding set timestamp. For example, still referring to Fig. 2, accordingly, the audio beat-sync duration may be a time duration determined based on the set timestamp 3.6 and the set timestamp 1.2.

In the present embodiment, the cropped video is a video obtained by cropping based on the audio beat-sync duration. For example, the cropped video may be obtained by cropping a video which has not been cropped and has the same duration as the audio beat-sync duration. For another example, on the basis of considering that the duration of the cropped video is the same as the audio beat-sync duration, combined with determining an audio clip between two set timestamps of the audio beat-sync duration (e.g., in the example of Fig. 2, it may be an audio clip between the set timestamp 1.2 and the set timestamp 3.6), a video clip that is suitable for playing this audio clip as the background sound can be determined as the cropped video.

In the case of acquiring the original video uploaded by the user, the original video can be cyclically played under the free browsing mode to provide the user with a complete display of the original video.

In the case of acquiring a cropping timestamp corresponding to the original video uploaded by the user and the cropped video, it's possible that when the audio is played to the corresponding set timestamp under the automatic playback mode, the cropped video can be obtained by processing the original video based on the cropping timestamp, and the display can be automatically switched to the cropped video; it's also possible that the original video can be cyclically played under the free browsing mode without the need of cropping. The cropping timestamp of the cropped video corresponding to the original video may be a timestamp corresponding to a cropped position in the original video uploaded by the user. The cropping timestamp may include a starting timestamp and/or an ending timestamp corresponding to the cropped video in the original video, when the audio is played to a set timestamp corresponding to the original video under the automatic playback mode, the original video is played from the starting timestamp to the ending timestamp or to a set timestamp corresponding to a next media resource, and the video as played is exactly the cropped video obtained by cropping the original video. For example, the starting timestamp may be a start position of the cropped video in the original video, and the ending timestamp may be an end position of the cropped video in the original video.

S403: displaying, on a display interface, media resources included in the media content and playing the audio.

S404, in response to the media content being in an automatic playback mode and a media resource corresponding to a target timestamp among a plurality of set timestamps being a target video, switching to display, on the display interface, a cropped target video corresponding to the target timestamp in response to the audio being played to the target timestamp.

In an embodiment of the present disclosure, the target video may be a video that needs to be cropped in the automatic playback mode. For example, the target video may be an original video corresponding to the target timestamp in the above-mentioned original video.

In the automatic playback mode, when the audio is played to the target timestamp, it needs to switch to display a media resource corresponding to the target timestamp. Since the media resource corresponding to the target timestamp is a target video that has not been cropped, it is necessary to firstly crop the target video, and then switch to display the cropped target video, so that the cropped target video can be a video suitable for displaying at the target timestamp by switching in beat-sync manner.

In one embodiment, the step of switching to display, on the display interface, a cropped target video corresponding to the target timestamp among a plurality of set timestamps in response to the audio being played to the target timestamp includes:

in response to the audio being played to a target timestamp among a plurality of set timestamps, acquiring a target video corresponding to the target timestamp and a cropping timestamp of the target video; and
playing, on the display interface, the target video based on the cropping timestamp.

Under the automatic playback mode, when the audio is played to the target timestamp, the target video corresponding to the target timestamp and a cropping timestamp for cropping the target video are acquired, and the target video is played on the display interface based on the cropping timestamp. For example, if the cropping timestamp is a starting timestamp (e.g., the timestamp 3.8) of the cropped video in the target video, the target video is played from the 3.8-second mark of the target video when the audio is played to the target timestamp.

S405, in response to a switching operation on the display interface, and in response to a media resource corresponding to the switching operation being a video, cyclically displaying a cropped video corresponding to the switching operation on the display interface, where the cropped video is obtained by cropping a media resource uploaded or captured for posting; or cyclically displaying an original video corresponding to the switching operation on the display interface, where the original video is a media resource uploaded or captured for posting.

If the media resources as acquired are all cropped videos, under the free browsing mode, it can be switched to display the cropped video corresponding to the switching operation and cyclically play the cropped video in response to the switching operation on the display interface. If the media resources as acquired are all original videos, under the free browsing mode, it can be switched to display the original video corresponding to the switching operation and cyclically play the original video in response to the switching operation on the display interface.

According to the technical solution of the embodiments of the present disclosure, in the scenario of mixed browsing of images and videos, under the automatic playback mode, if the acquired media resource is a cropped video, it can be directly switched to display the corresponding cropped video when the audio is played to the target timestamp; if the acquired media resource is an original video and a cropping timestamp corresponding to the original video, when the audio is played to the target timestamp, it needs to firstly crop the original video based on the cropping timestamp to obtain a cropped video, and then display the cropped video, so that the videos displayed on the display interface under the automatic playback mode are all cropped videos suitable for playing by switching in beat-sync manner. This avoids the situation that a single piece of video material is only displayed for its front part instead of a video clip which is suitable for playing in beat-sync manner and cropped during the posting. Under the free browsing mode, a plurality of media resources may be switched to be displayed in response to a switching operation on the display interface, and for a single media resource to be displayed, a cropped video or an original video may be displayed cyclically depending on the media resource as acquired.

In one embodiment, the method further includes:
in response to an automatic playback switching operation, sequentially playing the media resources by starting from a media resource corresponding to the automatic playback switching operation, and playing the audio by starting from a set timestamp corresponding to the media resource corresponding to the automatic playback switching operation.

The automatic playback switching operation may be an operation of switching to the automatic playback mode, such as an operation of switching from the free browsing mode to the automatic playback mode. The automatic playback switching operation is not limited in the embodiment of the present disclosure, for example, the user may single-tap the display interface once and then taps it again.

For example, under the free browsing mode, the media resource corresponding to the switching operation is cyclically displayed on the display interface; in such case, if the user single-taps the display interface once, a pause playback of the audio is triggered, and a pause playback of the currently displayed media resource is also triggered at the same time; if the user single-taps the display interface once again, it's switched from the free browsing mode back to the automatic playback mode, the media resources are sequentially played by starting from the currently displayed media resource, and the audio is played by starting from the set timestamp corresponding to the currently displayed media resource; that is, when the audio is played to each set timestamp, switching to display the corresponding media resource in beat-sync manner.

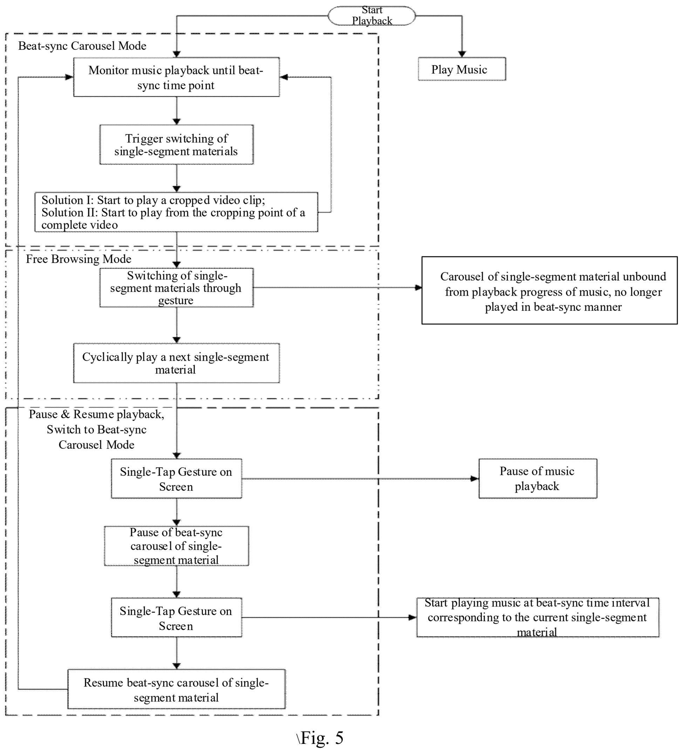

Fig. 5 is a schematic flow diagram of another media content display method according to an embodiment of the present disclosure. The present embodiment is an exemplary description of the above-described embodiments. As shown in Fig. 5, the media content display method of the present embodiment includes, for example, the following three stages (corresponding to three different dashed boxes shown in Fig. 5):

### (1) Beat-sync Carousel Mode

When the playback is initiated, the beat-sync carousel mode (i.e. automatic playback mode) is entered by default, and the music playback starts at the same time. When the music is played to a beat-sync time point, the switching of single-segment materials (i.e. the media resources) is triggered (i.e., when the audio is played to a target timestamp, it's switched to display the media resource corresponding to the target timestamp).

There are two options for switching single-segment materials.
Option I: starting to play a cropped video clip (that is, playing a cropped video);
Option II: starting to play from a cropped position in a complete video (that is, cropping the original video and then playing, e.g., starting to play the video from a starting timestamp in the original video).

### (2) Free Browsing Mode

For example, by switching single-segment materials through a gesture, it can be triggered to enter the free browsing mode. That is, in response to a switching operation on the display interface, a previous or next single-segment material corresponding to the currently played single-segment material is played cyclically, and the carousel of single-segment materials is unbound from the playback progress of the music, i.e., the materials are no longer played in beat-sync manner.

### (3) Pause & Resume Playback, Switch to Beat-sync Carousel Mode

Pausing and then resuming the playback, and switching to the beat-sync carousel mode, that is, switching to the automatic playback mode in response to the automatic playback switching operation. For example, firstly, it can pause the playback of music and also pause the carousel of single-segment materials by a single-tap gesture on screen, and then start playing the music from a corresponding beat-sync timestamp (that is, the corresponding set timestamp) of the current single-segment material by a single-tap gesture on screen again, so that each single-segment material is played in a beat-sync carousel mode again.

The switching between the automatic playback mode and the free browsing mode will be illustrated in the following embodiment.

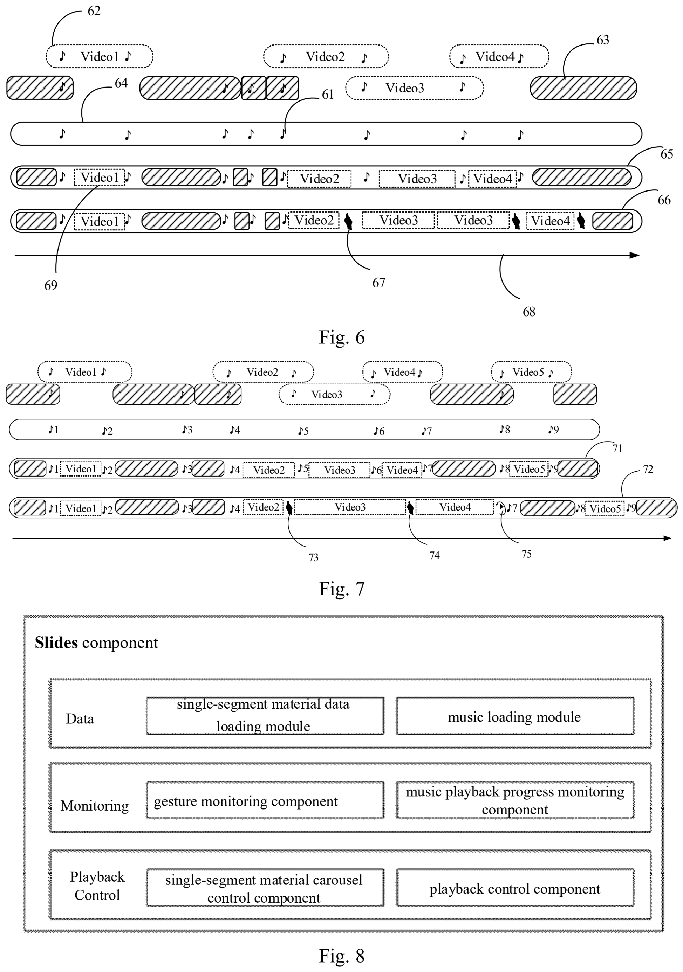

Fig. 6 is a schematic diagram of switching from an automatic playback mode to a free browsing mode according to an embodiment of the present disclosure. As shown in Fig. 6, the media content includes audio 64 and a plurality of media resources, the audio 64 corresponds to a plurality of set timestamps 61 (all the symbols shown in Fig. 6 that are the same as the set timestamp 61 can be regarded as set timestamps), and the plurality of media resources may be image (such as image 63) and video (such as video 69).

For example, video 62 represents an original video corresponding to Video1, video 69 represents a cropped video of the original video corresponding to Video 1, and the corresponding acquired video in this example is a cropped video, that is, video 69. In Fig. 6, video 62 is only used to explain an original video corresponding to a cropped video, and does not participate in the display of media content. The same is true for other videos shown in Fig. 6 (such as Video2, Video3, and Video4).

Under automatic playback mode 65, audio is played according to a timeline 68, and when the audio is played to a target timestamp, it's switched to display an image or a video corresponding to the target timestamp, so that beat-sync carousel of a plurality of images and videos can be realized, and all the played videos are, for example, cropped videos.

The playback effect 66 shown in Fig. 6 can be regarded as an example of the effect of switching from an automatic playback mode 65 to a free browsing mode, and it can be regarded as being in the automatic playback mode 65 before playing to Video2; when playing to Video2, Video2 is switched to Video3 in response to a switching operation 67, and Video3 is cyclically displayed until a next switching operation; Video3 is switched to Video4 in response to the next switching operation; and Video4 is switched to an image in response to another switching operation. In this example, under the free browse mode, all the displayed videos are cropped videos.

Fig. 7 is a schematic diagram of switching from an automatic playback mode to a free browsing mode and then returning to the automatic playback mode according to an embodiment of the present disclosure. Similar symbols in Fig. 7 and Fig. 6 indicate the same meanings, so details will not be described here again. As shown in Fig. 7, under automatic playback mode 71, the audio is played according to the timeline, and when the audio is played to the target timestamp, it's switched to display an image or a video corresponding to the target image, so that beat-sync carousel of a plurality of image and videos can be realized, and all the played videos are, for example, cropped videos.

The playback effect 72 shown in Fig. 7 can be regarded as an example of the effect of switching from an automatic playback mode 71 to a free browsing mode and then returning to the automatic playback mode 71, and it can be regarded as being in the automatic playback mode 71 before playing to Video2; when playing to Video2, Video2 is switched to Video3 in response to a switching operation 73, and the switched Video3 is an uncropped original video; while playing Video3, Video3 is switched to Video4 in response to a next switching operation 74, and the switched Video4 is an uncropped original video; while playing Video4, the Video4 continues to be played by returning to the automatic playback mode 71 in response to an automatic playback switching operation 75.

Fig. 8 is a schematic structural diagram of a component for implementing a media content display method provided by an embodiment of the present disclosure. As shown in Fig. 8, a Slides component may refer to a component for playing Slides works (i.e., the media content), the Slides component includes three parts of data, monitoring, and playback control, where the data part mainly includes a single-segment material data loading module and a music loading module, the monitoring part includes a gesture monitoring component and a music playback progress monitoring component, and the playback control part includes a single-segment material carousel control component and a music playback control component.

For example, under the automatic playback mode, the music playback progress monitoring component continuously monitors the playback progress of the music. When the music is played to a beat-sync time point (that is, the target timestamp), it triggers the switching of the current single-segment material, and a new single-segment material begins to play. When the gesture monitoring component monitors that a gesture switching (i.e. the switching operation) occurs, it's switched to the free browsing mode, the music playback progress monitoring component no longer monitors the playback progress of the music, and the music is played cyclically when its playback is finished; in such case, the single-segment materials are no longer automatically switched with the playback progress of the music, but a previous or next single-segment material of the current single-segment material is played cyclically depending on a monitored left-swipe or right-swipe gesture. When the gesture monitoring component monitors a single-tap gesture on screen to trigger the pause of the music and the pause of carousel, and a single-tap gesture on screen again to trigger a resumed playback (i.e. automatic playback switching operation), if it is in the free browsing mode, it returns to the automatic playback mode.

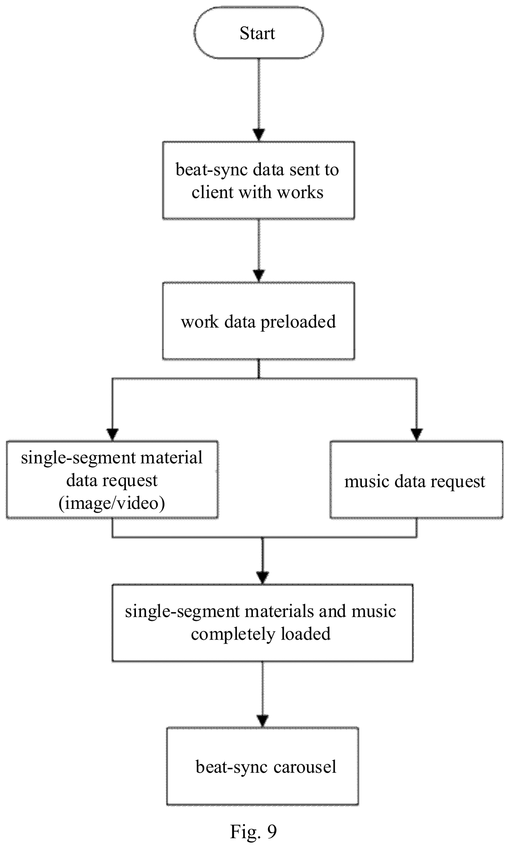

Fig. 9 is a schematic flow diagram of acquiring media content according to an embodiment of the present disclosure. As shown in Fig. 9, in the embodiment of the present disclosure, beat-sync data is sent to the client along with works (that is, the media content and the set timestamps of the audio included in the media content are simultaneously acquired); work data is preloaded, and a single-segment material data request (images/videos) and a music data request are executed at the same time, that is, images/videos (i.e., single-segment materials) are loaded through a single-segment material data loading module, and music is loaded through a music loading module, and these two modules are executed simultaneously; single-segment materials and music are loaded; and the materials are played in beat-sync carousel mode.

According to the technical solution of the embodiment of the present disclosure, for a Slides work browsed in a horizontal-wipe manner in which images and videos are arranged in a mixed manner, by matching the switching timing of single-segment materials with the beats of music, and simultaneously by intercepting a clip suitable for playing in beat-sync manner from the video material and matching the clip with a specified music beat, the beat-sync data is strongly correlated with a carousel progress of the single-segment materials, and one piece of beat-sync data corresponds to the switching of a specific single-segment material, and finally a form similar to a beat-sync single video is presented. At the same time, when a user's swipe gesture intervenes, it becomes a mode similar to album browsing, and the user can freely browse each segment of material; after the user's gesture is paused and the playback is resumed, the effect of beat-sync carousel is restored. In the technical solution, all the materials are independent materials in the end, and all the materials can be browsed as a whole, or can be browsed separately by freely swiping.

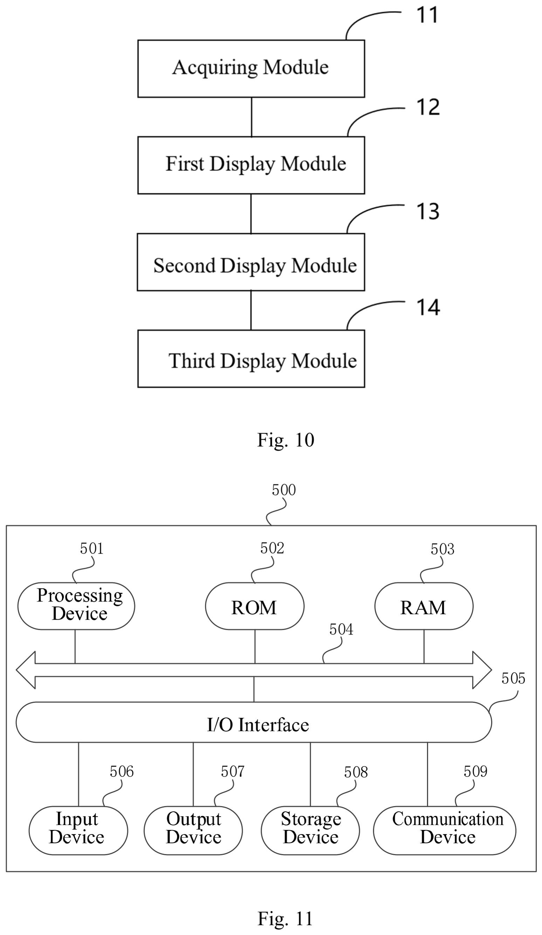

Fig. 10 is a schematic structural diagram of a media content display apparatus according to an embodiment of the present disclosure. As shown in Fig. 10, the apparatus includes an acquiring module 11, a first display module 12, a second display module 13, and a third display module 14.

The acquiring module 11 is configured to acquire media content, where the audio included in the media content corresponds to a plurality of set timestamps, the media content includes a plurality of media resources, and display forms of the plurality of media resources remain unchanged before and after the post of the media content.

The first display module 12 is configured to display, on a display interface, the media resources included in the media content and play the audio.

The second display module 13 is configured to switch to display, on the display interface, a media resource corresponding to a target timestamp among a plurality of set timestamps when the media content is in an automatic playback mode and the audio is played to the target timestamp, where the automatic playback mode is a mode in which each media resource is automatically displayed on the display interface in response to the audio being played to a corresponding set timestamp.

The third display module 14 is configured to display, on the display interface, a media resource corresponding to a switching operation on the display interface in response to the switching operation.

According to the technical solution provided by the embodiment of the present disclosure, first, the media content is acquired through the acquiring module, where the audio included in the media content corresponds to a plurality of set timestamps, the media content includes a plurality of media resources, and display forms of the plurality of media resources remain unchanged before and after the media content is posted; then the media resources included in the media content are displayed on the display interface and the audio is played, via the first display module; then, when the media content is in an automatic playback mode and the audio is played to a target timestamp among the plurality of set timestamps, it's switched to display, on the display interface, a media resource corresponding to the target timestamp via the second display module, where the automatic playback mode is a mode in which each media resource is automatically displayed on the display interface in response to the audio being played to a corresponding set timestamp; finally, in response to a switching operation on the display interface, the media resource corresponding to the switching operation is displayed on the display interface via the third display module.

In one embodiment, the acquiring module 11 may be, for example, configured to:
acquire the media content and the set timestamps of audio included in the media content, where the media content includes resource download information of a plurality of media resources and audio download information of the audio; and
acquire the media resources corresponding to the resource download information and the audio corresponding to the audio download information.

In one embodiment, the media resource includes image and/or video, and when the media resource is video, the acquiring module 11 may be, for example, configured to perform one or more of the following:
acquiring a cropped video, where the cropped video is a video cropped based on an audio beat-sync duration, and the audio beat-sync duration is a duration determined based on a difference between a set timestamp corresponding to the cropped video and a next set timestamp after the corresponding set duration;
acquiring an original video uploaded by a user;
acquiring a cropping timestamp corresponding to the original video uploaded by the user and the cropped video, where the cropping timestamp is a timestamp corresponding to a cropped position in the original video uploaded by the user.

In one embodiment, the number of the set timestamps is one less than the number of the media resources, and all the media resources except the firstly displayed media resource are in a one-to-one correspondence with the set timestamps.

In one embodiment, the second display module 13 may be, for example, configured to:
switch to display, on the display interface, a cropped target video corresponding to a target timestamp among the plurality of set timestamps when the media resource corresponding to the target timestamp is a target video and the audio is played to the target timestamp.

In one embodiment, the second display module 13 may be, for example, configured to:
acquire a target video corresponding to a target timestamp among the plurality of set timestamps and a cropping timestamp of the target video when the audio is played to the target timestamp; and
play, on the display interface, the target video based on the cropping timestamp.

In one embodiment, the third display module 14 may be, for example, configured to:
cyclically display, on the display interface, a cropped video corresponding to a switching operation on the display interface when the media resource corresponding to the switching operation is a video, where the cropped video is obtained by cropping a media resource uploaded or captured for posting; or
cyclically display, on the display interface, an original video corresponding to the switching operation, where the original video is a media resource uploaded or captured for posting.

In one embodiment, the apparatus further includes:
a playback module, configured to sequentially play the media resources by starting from a media resource corresponding to an automatic playback switching operation, and to play the audio by starting from a set timestamp corresponding to the media resource corresponding to the automatic playback switching operation, in response to the automatic playback switching operation.

The media content display apparatus according to the embodiment of the present disclosure can execute the media content display method according to any embodiment of the present disclosure, and has functional modules and beneficial effects corresponding to the executed method.

It is worth noting that the units and modules included in the above-described apparatus are only divided according to the functional logic, but are not limited to the above-described divisions, as long as the corresponding functions can be realized. In addition, the specific names of the functional units are only for convenience of mutual distinguishing, and are not used to limit the scope of protection of the embodiments of the present disclosure.

Fig. 11 is a schematic structural diagram of an electronic device according to an embodiment of the present disclosure. Referring to Fig. 11, which shows a schematic structural diagram of an electronic device (such as the terminal device or server in Fig. 11) 500 suitable for implementing embodiments of the present disclosure.

The electronic device includes:
one or more processing devices; and
a storage device for storing one or more programs,
the one or more programs, when executed by the one or more processing devices, cause the one or more processing devices to implement the media content display method provided by an embodiment of the present disclosure.

The terminal device in the embodiment of the present disclosure may include, but is not limited to, a mobile terminal such as a mobile phone, a notebook computer, a digital broadcast receiver, a PDA (personal digital assistant), a PAD (Tablet PC), a PMP (Portable Multimedia Player), an in-vehicle terminal (for example, an in-vehicle navigation terminal), and the like, and a fixed terminal such as a digital TV, a desktop computer, and the like. The electronic device illustrated in Fig. 11 is merely an example, and should not impose any limitation on the functionality and scope of use of the embodiments of the present disclosure.

As shown in Fig. 11, the electronic device 500 may include a processing device (e.g., central processing unit, graphics processing unit, etc.) 501 that may perform various appropriate actions and processes according to a program stored in the read-only memory (ROM) 502 or a program loaded from the storage device 508 into the random-access memory (RAM) 503. In the RAM 503, various programs and data necessary for the operation of the electronic device 500 are also stored. The processing device 501, the ROM 502, and the RAM 503 are connected to each other by a bus 504. An input/output (I/O) interface 505 is also connected to the bus 504.

Generally, the following devices may be connected to the I/O interface 505: an input device 506 including, for example, a touchscreen, an accelerometer, a keyboard, a mouse, a camera, a microphone, a gyroscope, etc.; an output device 507 including, for example, a liquid crystal display (LCD), a speaker, a vibrator, etc.; a storage device 508 including, for example, a magnetic tape, a hard disk, etc.; and a communication device 509. The communication device 509 may allow the electronic device 500 to have wirelessly or wired communication with other devices to exchange data. Although Fig. 11 shows an electronic device 500 with various devices, it should be understood that it is not required that all of the devices shown be implemented or provided. More or fewer devices may alternatively be implemented or provided.

In particular, according to embodiments of the present disclosure, the process described above in connection with the flowchart may be implemented as a computer software program. For example, embodiments of the present disclosure include a computer program product including a computer program carried on a non-transitory computer-readable medium, the computer program containing program code for performing the method shown in the flowchart. In such embodiments, the computer program may be downloaded and installed from the network via the communication device 509, or installed from the storage device 508, or installed from the ROM 502. When the computer program is executed by the processing device 501, the above-described functions defined in the method of the embodiment of the present disclosure are executed.

The names of messages or information interacted between multiple devices in embodiments of the present disclosure are for illustrative purposes only, and are not intended to limit the scope of these messages or information.

The electronic device provided by the embodiment of the present disclosure and the media content display method provided by the above embodiment belong to the same inventive concept, and for the technical details not described in detail in the present embodiment, reference can be made to the above embodiment, and the present embodiment has the same beneficial effects as the above embodiment.

Embodiments of the present disclosure provide a computer storage medium storing computer program thereon, and when the program is executed by a processor, the media content display method provided by the above embodiment is realized.

It should be noted that the computer-readable medium of the present disclosure may be a computer-readable signal medium, a computer-readable storage medium, or any combination thereof.

A computer storage medium may be a storage medium of computer-executable instructions that, when executed by a computer processor, are used to perform the method as provided by the present disclosure.

The computer-readable storage medium may be, for example, but is not limited to, an electrical, magnetic, optical, electromagnetic, infrared, or semiconductor system, apparatus, or device, or any combination thereof. More specific examples of computer-readable storage medium may include, but are not limited to, electrical connections with one or more wires, portable computer magnetic disk, hard disk, random-access memory (RAM), read-only memory (ROM), erasable programmable read-only memory (EPROM or Flash), optical fiber, portable compact disc read-only memory (CD-ROM), optical storage device, magnetic storage device, or any suitable combination of the above. In the present disclosure, a computer-readable storage medium may be any tangible medium containing or storing a program that may be used by or in conjunction with an instruction execution system, apparatus, or device. Whereas in the present disclosure, a computer-readable signal medium may include a data signal propagated in a baseband or as part of a carrier wave, carrying computer-readable program code therein. Such propagated data signals may take a variety of forms including, but not limited to, electromagnetic signals, optical signals, or any suitable combination of the above. The computer-readable signal medium may also be any computer-readable medium other than the computer-readable storage medium that may send, propagate, or transmit a program for use by or in connection with an instruction execution system, apparatus, or device. The program code contained on the computer-readable medium may be transmitted by using any suitable medium, including, but not limited to, wires, optical cables, RF (radio frequency), or the like, or any suitable combination of the above.

In some embodiments, the client and server may communicate by using any currently known or future developed network protocol such as HTTP (HyperText Transfer Protocol), and may be interconnected with any form or medium of digital data communication (e.g., communication network). Examples of communication networks include local area networks ("LAN"), wide area networks ("WAN"), international networks (e.g., the Internet), and end-to-end networks (e.g., ad hoc end-to-end networks), as well as any currently known or future-developed networks.

The computer-readable medium may be included in the electronic device described above; it may also exist alone without being installed in the electronic device.

The computer-readable medium carries one or more programs that, when executed by the electronic device, cause the electronic device to: acquire media content, where audio included in the media content corresponds to a plurality of set timestamps, the media content includes a plurality of media resources, and display forms of the plurality of media resources remain unchanged before and after the media content is posted; display, on a display interface, the media resources included in the media content and play the audio; switch to display, on the display interface, a media resource corresponding to a target timestamp among a plurality of set timestamps in response to the media content being in an automatic playback mode and the audio being played to the target timestamp, where the automatic playback mode is a mode in which each media resource is automatically displayed on the display interface in response to the audio being played to a corresponding set timestamp; and in response to a switching operation on the display interface, display, on the display interface, a media resource to which the switching operation corresponds.

Computer program code for performing operations of the present disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to one or more embodiments of the present disclosure, Example 1 provides a media content display method, including:
acquiring media content, audio included in the media content corresponding to a plurality of set timestamps, the media content including a plurality of media resources, and display forms of the plurality of media resources remaining unchanged before and after a post of the media content;
displaying, on a display interface, the media resources included in the media content and playing the audio; and
in response to the media content being in an automatic playback mode and the audio being played to a target timestamp among the plurality of set timestamps, switching to display, on the display interface, a media resource corresponding to the target timestamp, where the automatic playback mode is a mode in which each media resource is automatically displayed on the display interface in response to the audio being played to a corresponding set timestamp; and
in response to a switching operation on the display interface, displaying, on the display interface, a media resource to which the switching operation corresponds.

According to one or more embodiments of the present disclosure, Example 2 provides the method according to Example 1,
the acquiring media content includes:
simultaneously acquiring the media content and the set timestamps of the audio included in the media content, where the media content includes resource download information of the plurality of media resources and audio download information of the audio; and
acquiring the media resources corresponding to the resource download information and the audio corresponding to the audio download information.

According to one or more embodiments of the present disclosure, Example 3 provides the method according to Example 2,
the media resource includes image and/or video, and when the media resource is video, the acquiring media content includes one or more of the following:
acquiring a cropped video, where the cropped video is a video cropped based on an audio beat-sync duration, and the audio beat-sync duration is a duration determined based on a difference between a set timestamp corresponding to the cropped video and a next set timestamp after the corresponding set duration;
acquiring an original video uploaded by a user;
acquiring a cropping timestamp corresponding to the original video uploaded by the user and the cropped video, where the cropping timestamp is a timestamp corresponding to a cropped position in the original video uploaded by the user.

According to one or more embodiments of the present disclosure, Example 4 provides a method according to Example 1,
the number of the set timestamps is one less than the number of the media resources, and all the media resources except a firstly displayed media resource are in a one-to-one correspondence with the set timestamps.

According to one or more embodiments of the present disclosure, Example 5 provides a method according to Example 1,
in response to a media resource corresponding to a target timestamp among the plurality of set timestamps being a target video, switching to display, on the display interface, the media resource corresponding to the target timestamp in response to the audio being played to the target timestamp, including:
in response to the audio being played to the target timestamp among the plurality of set timestamps, switching to display, on the display interface, a cropped target video corresponding to the target timestamp.

According to one or more embodiments of the present disclosure, Example 6 provides a method according to Example 5,
in response to the audio being played to the target timestamp among the plurality of set timestamps, switching to display, on the display interface, a cropped target video corresponding to the target timestamp, including:
in response to the audio being played to the target timestamp among the plurality of set timestamps, acquiring a target video corresponding to the target timestamp and a cropping timestamp of the target video; and
playing, on the display interface, the target video based on the cropping timestamp.

According to one or more embodiments of the present disclosure, Example 7 provides a method according to Example 1,
in response to the media resource corresponding to the switching operation being a video, displaying, on the display interface, the media resource to which the switching operation corresponds, including:
cyclically displaying, on the display interface, a cropped video corresponding to the switching operation, where the cropped video is obtained by cropping a media resource uploaded or captured for posting; or
cyclically displaying, on the display interface, an original video corresponding to the switching operation, where the original video is a media resource uploaded or captured for posting.

According to one or more embodiments of the present disclosure, Example 8 provides a method according to Example 1, further including:
in response to an automatic playback switching operation, sequentially playing the media resources by starting from a media resource corresponding to the automatic playback switching operation, and playing the audio by starting from a set timestamp corresponding to the media resource corresponding to the automatic playback switching operation.

According to one or more embodiments of the present disclosure, Example 9 provides a media content display apparatus, including:
an acquiring module, configured to acquire media content, where audio included in the media content corresponds to a plurality of set timestamps, the media content includes a plurality of media resources, and display forms of the plurality of media resources remain unchanged before and after a post of the media content;
a first display module, configured to display, on a display interface, the media resources included in the media content and to play the audio;
a second display module, configured to switch to display, on the display interface, a media resource corresponding to a target timestamp among the plurality of set timestamps in response to the media content being in an automatic playback mode and the audio being played to the target timestamp, where the automatic playback mode is a mode in which each media resource is automatically displayed on the display interface in response to the audio being played to a corresponding set timestamp; and
a third display module, configured to display, on the display interface, a media resource corresponding to a switching operation on the display interface in response to the switching operation.

According to one or more embodiments of the present disclosure, Example 10 provides an electronic device, including:
one or more processing devices; and
a storage device for storing one or more programs,
the one or more programs, when executed by the one or more processing devices, cause the one or more processing devices to implement the media content display method provided by an embodiment of the present disclosure.

According to one or more embodiments of the present disclosure, Example 11 provides a storage medium including computer-executable instructions that, when executed by a computer processor, perform the media content display method provided by an embodiment of the present disclosure.

The foregoing descriptions are merely preferred embodiments of the present disclosure and explanations of the applied technical principles. Those skilled in the art should understand that the scope of disclosure involved in the present disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. A media content display method, comprising:
acquiring media content, the media content comprising audio corresponding to a plurality of set timestamps, the media content further comprising a plurality of media resources, and display forms of the plurality of media resources remaining unchanged before and after a post of the media content;
displaying, on a display interface, at least one media resource among the plurality of media resources included in the media content, and playing the audio;
switching, in response to the media content being in an automatic playback mode and the audio being played to a target timestamp among the plurality of set timestamps, to display a media resource corresponding to the target timestamp on the display interface, the automatic playback mode being a mode in which each of the plurality of media resources is automatically displayed on the display interface in response to the audio being played to a corresponding set timestamp; and
displaying, in response to a switching operation on the display interface, on the display interface, a media resource to which the switching operation corresponds.

2. The method according to claim 1, wherein the acquiring media content comprises:
acquiring the media content and the plurality of set timestamps corresponding to the audio included in the media content, the media content comprising resource download information of the plurality of media resources and audio download information of the audio; and
acquiring a media resource corresponding to the resource download information and audio corresponding to the audio download information.

3. The method according to claim 2, wherein the media resource comprises image and/or video, and
wherein in response to the media resource being video, the acquiring media content comprises one or more of:
acquiring a cropped video, wherein the cropped video is a video obtained by cropping based on an audio beat-sync duration, and the audio beat-sync duration is a duration determined based on a difference between a set timestamp corresponding to the cropped video and a next set timestamp after the set timestamp corresponding to the cropped video;
acquiring an original video uploaded by a user;
acquiring a cropping timestamp corresponding to the original video uploaded by the user and the cropped video, wherein the cropping timestamp is a timestamp corresponding to a cropped position in the original video uploaded by the user.

4. The method according to any one of claims 1-3, wherein a quantity of the plurality of set timestamps is one less than a quantity of the plurality of media resources, and all the plurality of media resources, except a first displayed media resource, are in a one-to-one correspondence with the plurality of set timestamps.

5. The method according to claim 1, wherein in response to the media resource corresponding to the target timestamp being a target video, switching to display the media resource corresponding to the target timestamp on the display interface in response to the audio being played to the target timestamp among the plurality of set timestamps, comprising:
in response to the audio being played to the target timestamp among the plurality of set timestamps, switching to display a cropped target video corresponding to the target timestamp on the display interface.

6. The method according to claim 5, wherein the in response to the audio being played to the target timestamp among the plurality of set timestamps, switching to display a cropped target video corresponding to the target timestamp on the display interface comprises:
acquiring, in response to the audio being played to the target timestamp among the plurality of set timestamps, the target video corresponding to the target timestamp and a cropping timestamp of the target video; and
playing, on the display interface, the target video based on the cropping timestamp.

7. The method according to claim 1, wherein the media resource corresponding to the switching operation is video, and
wherein the displaying, on the display interface, a media resource to which the switching operation corresponds comprises:
cyclically displaying, on the display interface, a cropped video corresponding to the switching operation, wherein the cropped video is obtained by cropping a media resource uploaded or captured for posting; or
cyclically displaying, on the display interface, an original video corresponding to the switching operation, wherein the original video is a media resource uploaded or captured for posting.

8. The method according to any one of claims 1-7, further comprising: playing, in response to an automatic playback switching operation, the plurality of media resources sequentially by starting from a media resource corresponding to the automatic playback switching operation, and playing the audio by starting from a set timestamp corresponding to the media resource corresponding to the automatic playback switching operation.

9. A media content display apparatus, comprising:
an acquiring module, configured to acquire media content, the media content comprising audio corresponding to a plurality of set timestamps, the media content further comprising a plurality of media resources, and display forms of the plurality of media resources remaining unchanged before and after a post of the media content;
a first display module, configured to display, on a display interface, at least one media resource among the plurality of media resources included in the media content, and play the audio;
a second display module, configured to switch, in response to the media content being in an automatic playback mode and the audio being played to a target timestamp among the plurality of set timestamps, to display a media resource corresponding to the target timestamp on the display interface, the automatic playback mode being a mode in which each of the plurality of media resources is automatically displayed on the display interface in response to the audio being played to a corresponding set timestamp; and
a third display module, configured to display, in response to a switching operation on the display interface, on the display interface, a media resource to which the switching operation corresponds.

10. The apparatus according to claim 9, wherein the acquiring module is configured to:
acquire the media content and the plurality of set timestamps corresponding to the audio included in the media content, the media content comprising resource download information of the plurality of media resources and audio download information of the audio; and
acquire a media resource corresponding to the resource download information and the audio corresponding to the audio download information.

11. The apparatus according to claim 9, wherein in response to the media resource corresponding to the target timestamp being a target video, the second display module is configured to:
switch to display a cropped target video corresponding to the target timestamp on the display interface in response to the audio being played to the target timestamp among the plurality of set timestamps.

12. The apparatus according to claim 9, wherein in response to the media resource corresponding to the switching operation being a video, the third display module is configured to:
cyclically display, on the display interface, a cropped video corresponding to the switching operation, wherein the cropped video is obtained by cropping a media resource uploaded or captured for posting; or
cyclically display, on the display interface, an original video corresponding to the switching operation, wherein the original video is a media resource uploaded or captured for posting.

13. The apparatus according to any one of claims 9-12, further comprising a playback module configured to:
play, in response to an automatic playback switching operation, the plurality of media resources sequentially by starting from a media resource corresponding to the automatic playback switching operation, and play the audio by starting from a set timestamp corresponding to the media resource corresponding to the automatic playback switching operation.

14. An electronic device, comprising:
one or more processing devices; and
a storage device configured to store one or more programs, wherein
the one or more programs, when executed by the one or more processing devices, cause the one or more processing devices to implement the media content display method according to any one of claims 1-8.

15. A storage medium comprising computer-executable instructions, wherein the computer-executable instructions, when executed by a computer processor, cause the computer processor to perform the media content display method according to any one of claims 1-8.
